# EUROPEAN PATENT APPLICATION

(11) **EP 4 843 828 A1**
(43) Date of publication of application: **25.11.2026**
(21) Application number: 26179541.3
(22) Date of filing: 19.05.2026
(51) Int. Cl.: B60P 3/22, B60P 3/24

(54) **TANK TRAILER**

(30) Priority: 19.05.2025 FI 20253199
(71) Applicant: CVT Works Oy, 43100 Saarijärvi (FI)
(72) Inventor: KÄRKKÄINEN, Anssi, 43100 SAARIJÄRVI (FI); KÄRKKÄINEN, Juho, 43100 SAARIJÄRVI (FI)
(74) Representative: Kespat Oy

(57) **Abstract**

The invention relates to a tank trailer (10), which includes a body (12), a drawbar (14), an axle group (16) with wheels (18) supported to the body (12) for supporting the tank trailer (10) to a base, a tank (22) for storing liquid and a spill basin (24) surrounding the tank (22), the volume of which spill basin (24) is greater than or equal to, advantageously 10% greater than the volume of the tank (22), in order to collect and recover any liquid potentially leaking from the tank (22), and said spill basin (24) and tank (22) together constitute the body (12).

## Description

The present invention relates to a tank trailer, which includes a body, a drawbar, an axle group with wheels for supporting the tank trailer to a base and a tank for storing liquid, a spill basin adapted to surround the tank, the volume of which spill basin is greater than or equal to, advantageously 10% greater than the volume of the tank, in order to collect and recover any liquid potentially leaking from the tank.

The efficient use of contemporary forestry machines requires a possibility to refuel a forestry machine in the working area or in its immediate vicinity. The working areas are often located far from the public fuel distribution network, which is why fuel needs to be arranged to the site in tanks.

Legislation requires that the access of fuel to the natural environment is prevented, also when the fuel tank has a failure. So-called IBC tanks are applicable tanks in terms of legislative requirements.

Prior art includes a tank trailer marketed under the name "Diesel Trailer" by Shermac Australia Pty Ltd, with which fuel can be transferred easily to the point of use, also in demanding terrain conditions, such as in mines. However, the problem with this tank trailer is its heavy structure, which reduces the payload, and it has not been taken into account in it how the access of fuel to the natural environment is prevented if there is a leak in the tank.

The object of the present invention is a tank trailer which is lighter in weight and has a greater payload than prior art solutions and which can be used for ensuring the safe storage of fuel also if the fuel tank has a failure. The characteristic features of the invention are presented in claim 1.

The object of the tank trailer according to the present invention is achieved by means of a tank trailer which includes a body, a drawbar, an axle group with wheels supported on the body for supporting the tank trailer to a base and a tank for storing liquid, and a spill basin adapted to surround the tank, the volume of which spill basin is greater than or equal to, advantageously 10% greater than the volume of the tank, in order to collect and recover any liquid potentially leaking from the tank. The tank includes cross-directional stiffeners of the tank trailer. The stiffeners are adapted to transmit forces between the tank and the spill basin to constitute a self-supporting body.

The tank trailer according to the present invention has a structure that is lighter in weight than in corresponding prior art tank trailers, because the tank and the spill basin together constitute a load-bearing body structure of the tank trailer, and there is no need for a separate body that is built from, for example, longitudinal body beams that continue over the distance of the entire tank trailer. This gives savings in the weight of the tank trailer, and the load-carrying capacity can be utilized as payload. The tank and the spill basin that surrounds the tank together provide sufficient rigidity for the body. At the same time, the spill basin that surrounds the tank guarantees safe usability of the tank trailer in all usage situations, even when there is a leak in the tank.

The cross-directional stiffeners between the tank and the spill basin can also be referred to as supporting elements or force transmission elements, or supporting spacers or force transmission spacers.

The cross-directional stiffeners are advantageously adapted to follow the contours of the outer surface of the tank and the inner surface of the spill basin. In this way, force can be transmitted effectively and essentially without clearance between these items in order to stiffen the body.

In other words, the body constituted jointly by the tank and the spill basin is self-supporting.

In the tank trailer according to the invention, the tank constitutes an IBC tank.

In other words, in the tank trailer the tank is an inner tank and the spill basin is an outer tank, together constituting a two-shell tank structure.

The tank trailer advantageously includes a support structure adapted to be fastened under the spill basin in order to stiffen the body, which support structure includes cross-directional beams of the tank trailer and edge parts that connect these together. Such a separate support structure is very light in weight, but still provides additional rigidity to the body that is constituted by the spill basin and the tank. Furthermore, by means of the support structure the body retains sufficient rigidity also when the tank is temporarily not inside the spill basin.

The tank advantageously includes longitudinal stiffeners of the tank trailer. This improves the rigidity of the tank and also the rigidity of the tank to withstand its internal pressure, which may increase as the liquid transported gasifies.

The longitudinal stiffeners are advantageously folds provided in the tank. The folds stiffen the tank effectively without increasing the weight of the tank significantly.

According to one embodiment, the tank trailer includes a second tank for another liquid to be stored, and the spill basin includes a separate cross-directional space for a second tank. In this way, the tank trailer can be used for transporting to a forestry machine, for example, both fuel in one tank and urea used for the treatment of stumps in the second tank. However, the tank trailer according to the invention can also be implemented by using just one tank.

The spill basin advantageously includes a separating wall for forming two separate spaces for a tank and a second tank. In this way, each tank can be supported essentially in a clearance-free manner to the spill basin.

The tank advantageously includes beveled corners for improving the pressure resistance of the tank. According to regulations, the tank must withstand an internal pressure of 2 bar, which can be caused by the vaporization of fuel by heat.

The tank trailer advantageously includes locking means for locking the tank in a detachable manner to the spill basin to form said body. With the locking, it can be ensured that the tank remains in place and supported to the spill basin in all situations in order to transmit forces between the spill basin and the tank in order to stiffen the self-supporting body.

According to one embodiment, the spill basin includes guides for positioning the tank in the spill basin while the tank can be lowered by means of the guides into the spill basin for transport and lifted out of the spill basin for inspection. In this way, it is easy to inspect the tank by lifting the tank out from within the spill basin. The guides facilitate the positioning of the tank correctly with respect to the spill basin before fastening by means of the locking means. The guides also enable the replacement of identical tanks so that an empty tank is lifted out and a full tank is changed in its place. This expedites the refueling of the tank trailer or a change in the fuel grade.

The tank advantageously includes lifting lugs embedded in the top surface of the tank for lifting the tank from the spill basin and for lowering it into the spill basin. The lifting lugs can be used for obtaining a reliable and sturdy grip of the tank for lifting. On the other hand, the lifting lugs embedded in the top surface of the tank do not take any space on top of the tank and do not disturb the use of the cover structure.

The tank trailer advantageously includes an openable cover structure adapted on top of the tank and the spill basin, forming a storage space. In this way, it is possible to store the ancillary equipment related to refueling, such as hoses, pump and valves, in the storage space, and they always travel with the tank trailer.

The tank trailer advantageously includes quick coupling means for fastening and detaching the cover structure for the lifting of the tank. In this way, the cover structure can be transferred quickly to the side before lifting the tank.

The drawbar is advantageously connected directly to the axle group. In this case, the traction is transmitted to the spill basin and the tank, which constitute the body, advantageously via the support structure. In this way, the forces transmitted from the drawbar cannot cause major direct point-like strain on the spill basin, as this strain could damage the spill basin, causing a leak.

The axle group advantageously includes two axles, and the drawbar is fastened to the axle first in the travel direction of the tank trailer, with the axles being connected to the cross-directional beams. The cross-directional beams constitute a sturdy connection point for the axles.

The length of the tank trailer can be 1.5 - 7 m, advantageously 1.8 - 3 m. In this size range, in terms of loading, it is possible to achieve sufficient rigidity of the body constituted by the tank and the spill basin.

The width of the tank trailer can be 1.0 - 3.0 m, advantageously 1.5 - 2.0 m.

The volume of the tank can be 400 - 8000 1, advantageously 500 - 1000 l. It is advantageous to keep the volume of the tank at a volume below 1000 liters, because in Finnish legislation this is the limit where any larger tanks are subject to more stringent legislative requirements.

The primary shape of the cross section of the tank is advantageously a quadrangle where the corners are beveled in order to increase rigidity. Such a shape is very rigid in itself.

The spill basin advantageously surrounds the tank over the entire height of the tank. In this way, the spill basin can support the tank in that area to which the hydrostatic pressure created by the liquid in the tank is directed.

The distance of the top surface of the tank from a base underneath the tank trailer is advantageously 30 - 50% of the width of the tank trailer. In other words, the center of gravity of the tank trailer is quite low, which renders the tank trailer an all-terrain unit.

Said cross-directional stiffeners are advantageously adapted to support the tank from both the bottom and sides of the tank. In this way, the support is provided between the tank and the spill basin over all of that area to which the hydrostatic pressure created by the liquid in the tank is directed.

The cross-directional stiffeners are advantageously adapted to extend over a distance of 80 - 100% of the height of the tank. This enables the supporting of the tank throughout and the transmission of forces both in the lateral and vertical directions essentially without clearance between the tank and the spill basin.

There can be cross-directional stiffeners at a distance of, for example, 30 - 50 cm from each other in the longitudinal direction of the tank trailer, in which case sufficient supporting is achieved.

The invention, which is not restricted to the embodiments presented below, is described in more detail by making reference to the enclosed drawings, in which:

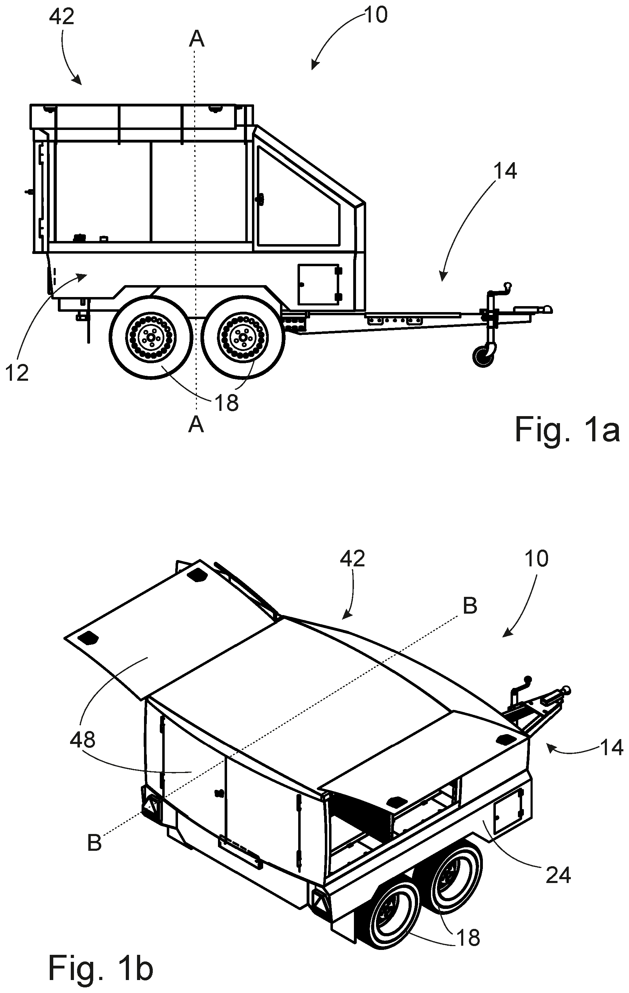

- Figure 1a: shows a side view of one advantageous embodiment of the tank trailer with the hatches of the cover structure closed,
- Figure 1b: shows an axonometric view diagonally from the rear of the tank trailer of Figure 1a with the hatches of the cover structure open,

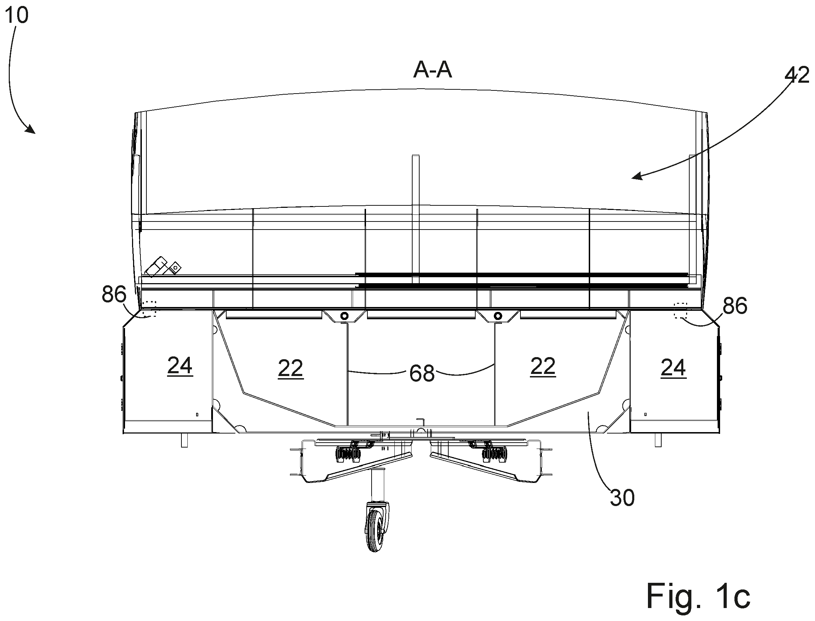

- Figure 1c: shows cross section A-A of Figure 1a,
- Figure 1b: shows cross section B-B of Figure 1b,
- Figure 2a: shows a side view of a second embodiment of the tank trailer according to the invention,
- Figure 2b: shows a top view of the tank trailer of Figure 2a,
- Figure 3: shows an axonometric view of the support frame of the body separately,
- Figure 4a: shows an axonometric view of the spill basin separately,
- Figure 4b: shows a top view of the spill basin of Figure 4a,
- Figure 5a: shows an axonometric view of the tank separately,
- Figure 5b: shows a cross section of Figure 5a,
- Figure 5c: shows a side view of the tank of Figure 5a,
- Figure 5d: shows a top view of the tank of Figure 5a,
- Figure 6: shows a top view of the axle group and drawbar of the tank trailer separately,
- Figure 7: shows an axonometric view of a second tank separately,
- Figure 8: shows an axonometric blow-up of the fold and lifting lug of the tank.

The figures refer to different parts of the invention using the following reference numbers:
- 10: tank trailer
- 12: body
- 14: drawbar
- 16: axle group
- 18: wheels
- 20: support frame
- 22: tank
- 24: spill basin
- 26: cross-directional beam
- 28: edge parts
- 30: cut metal sheet
- 32: longitudinal stiffeners
- 34: cross-directional stiffeners
- 36: guides
- 38: beveled corners
- 42: cover structure
- 44: first axle
- 46: second axle
- 48: hatch of cover structure
- 50: hatch of tank
- 52: fixing point
- 54: tank space
- 62: separating wall
- 64: front wall
- 66: outlet opening
- 68: splash guard
- 70: lifting lug
- 72: fold
- 74: second tank
- 76: cross-directional space
- 78: filling pipe for second tank
- 80: locking means
- 82: fixing points for axle group
- 84: openings of locking means
- 86: quick coupling means of cover structure.

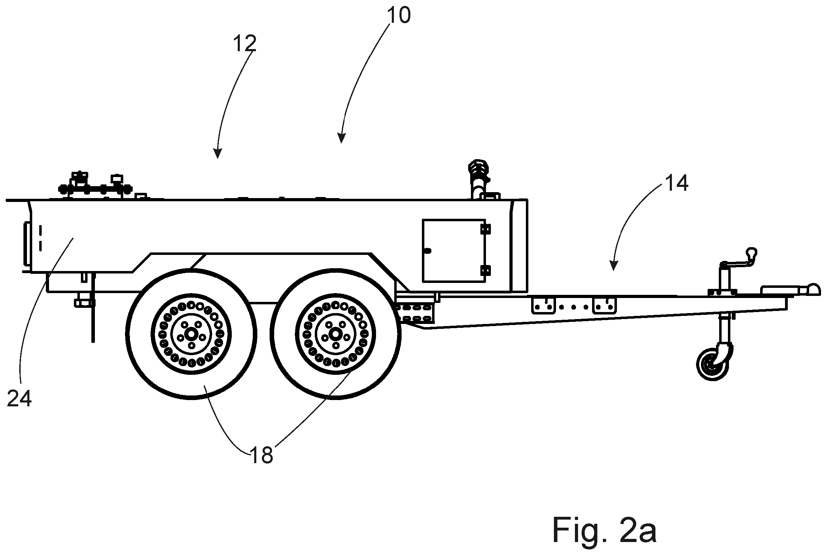

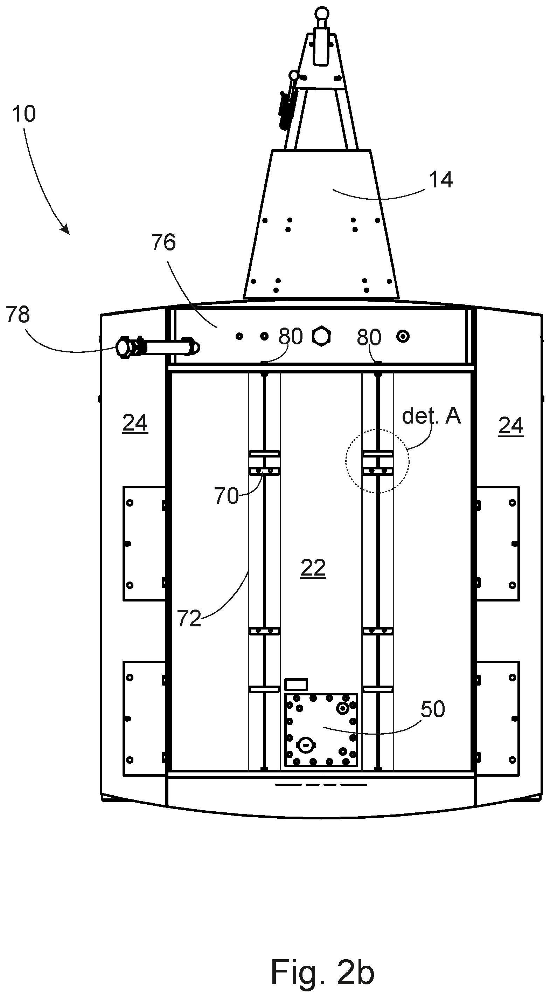

Figures 1a - 1d show a first advantageous embodiment of the tank trailer 10 according to the invention, where the tank trailer 10 includes a cover structure 42. Figures 2a and 2b, in turn, show a simplest second embodiment of the tank trailer 10 according to the invention, where there is no cover structure. The cover structure is not a necessary part of the tank trailer according to the invention.

What is common for all embodiments is that the tank trailer 10 according to the invention includes a drawbar 14, an axle group 16, a tank 22 for a liquid to be transported as well as a spill basin 24 surrounding the tank 22, with the tank 22 and the spill basin 24 together constituting a self-supporting body 12 of the tank trailer 10. The volume of the spill basin 24 is at least as big as the total combined volume of the tank 22 or tanks, but advantageously 10% greater in order to fulfil legislative requirements.

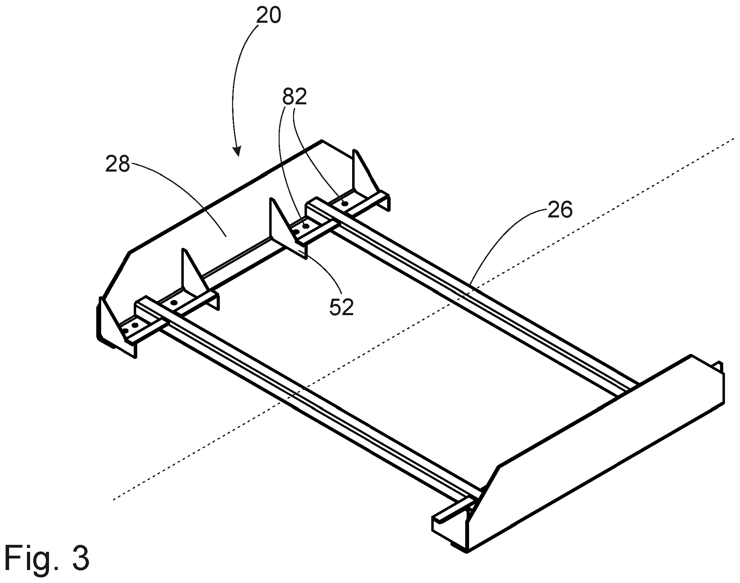

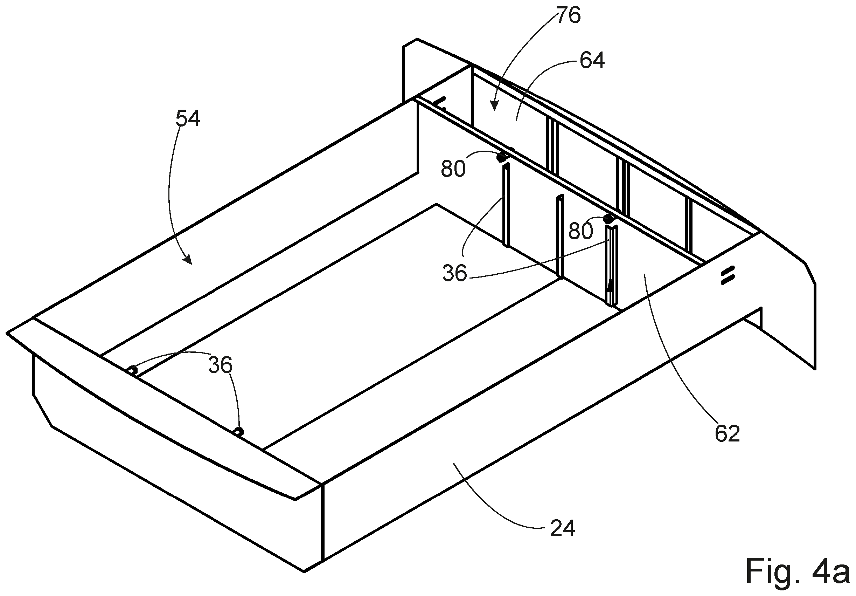

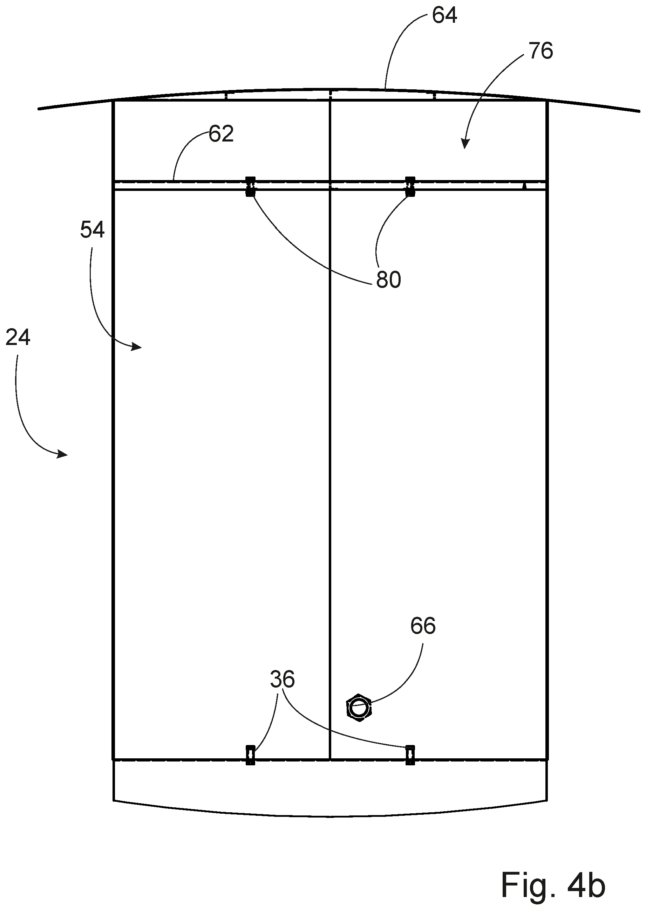

From the point of view of the formation of the body 12 of the tank trailer 10, sufficient rigidity is achieved by means of the total combined rigidity of the spill basin 24 and the tank 22, which is advantageously increased by using a separate support structure 20 to support the spill basin 24, which support structure 20 is shown in separately in Figure 3. The spill basin 24 and the support frame 20 are so dimensioned that the spill basin 24 can be lowered into the support frame 20 and fastened to the support frame 20 by advantageously using fastening points 52. The support frame 20 consists of beams 26, which are in cross direction with respect to the longitudinal direction of the tank trailer, indicated by a broken line in Figure 3, and of edge parts 28 that connect these by their ends. These together accomplish a structure that stiffens the spill basin 24, which is shown in more detail in Figures 4a and 4b.

Even though in the figures of the patent application the body has been implemented as a combination structure of the tank, the spill basin and the support structure, it must be understood that the tank trailer according to the invention can also be implemented without the support structure, if the rigidity of the tank and the spill basin is dimensioned so that these two constitute sufficient overall rigidity and if separate mounting points are adapted for the axle group on the bottom of the spill basin.

The spill basin 24 is a structure the purpose of which is to surround the tank that contains a liquid to be transported and stored and to ensure that the liquid cannot escape to the environment, not even if there is a failure or leak in the tank. The spill basin 24 is a structure that is open at least partly at the top, and it advantageously includes guides 36 with which the tank to be lowered inside the spill basin 24 can be positioned easily to the middle of the spill basin 24. The guides 36 facilitate the lowering and centering of the tank, and this, in turn, enables the easy lifting of the tank out of the spill basin 24 and the relocation of the tank. The guides 36 can be rails or guide surfaces, for example. This feature is important so that the tank can be inspected easily at prescribed intervals. The tank can also be replaced with another one if the liquid transported or its grade changes.

In an advantageous embodiment of the spill basin 24 shown in Figures 4a and 4b, the spill basin 24 is provided with two space sections separated from each other, namely tank space 54 and cross-directional space 76 for a second tank 74, and these two are separated from each other by a separating wall 62. This enables the use of two different tanks and thereby also the transport of two different liquids simultaneously by using the tank trailer according to the invention.

As shown in Figure 4b, there is advantageously an outlet opening 66 on the bottom of the spill basin 24, through which outlet opening 66 any liquid that has run into the spill basin 24 can be discharged from the spill basin and recovered in a controlled manner by using gravity without pumping. The bottom of the spill basin can be divided into two parts with respect to the center line so that the parts are tilted towards the center line, in which case any liquid on the bottom of the spill basin ends up at the outlet opening.

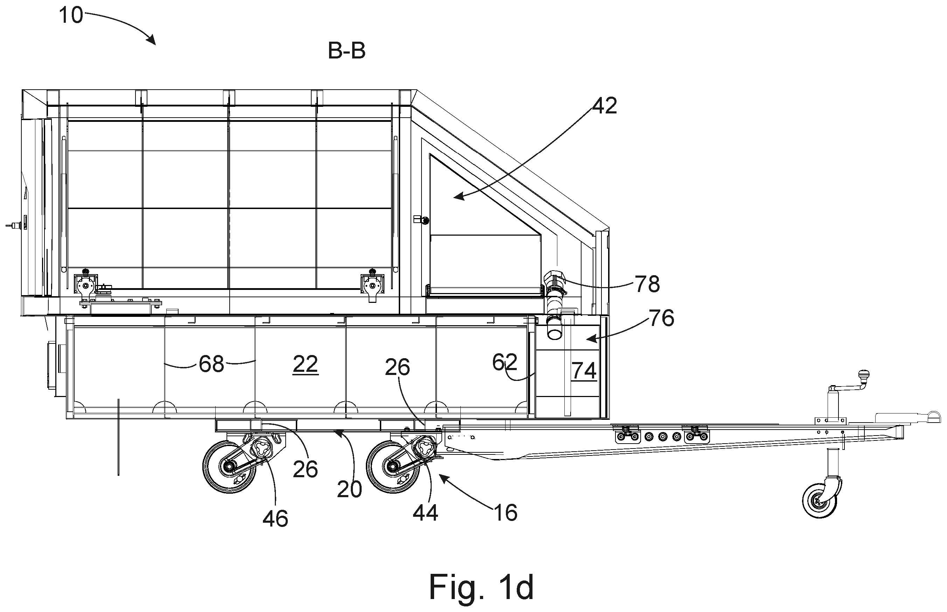

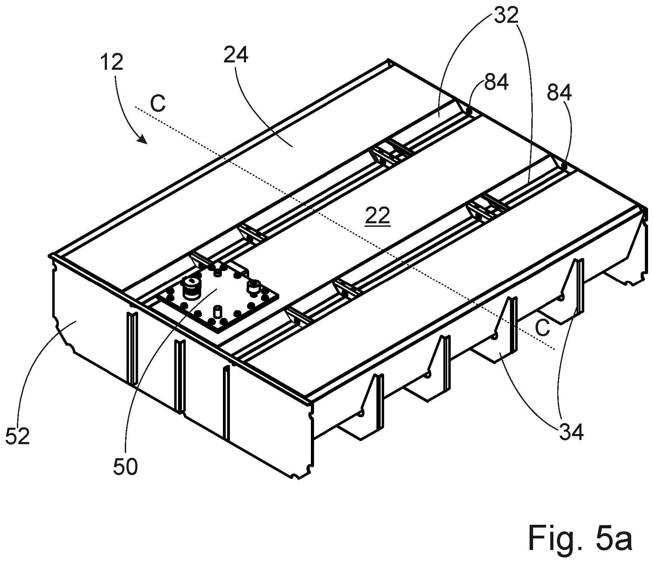

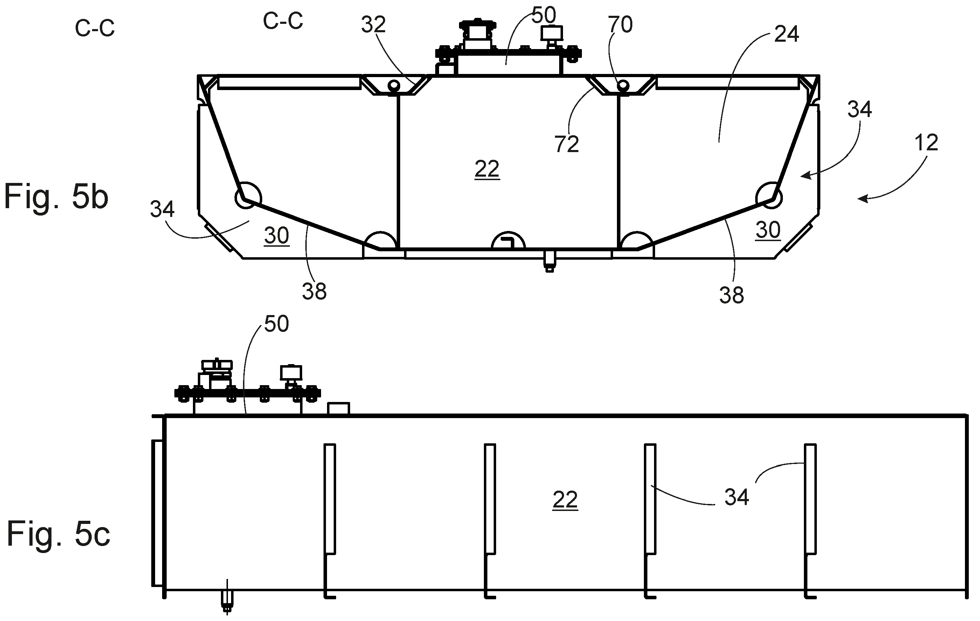

An advantageous embodiment of the tank 22 is shown in Figures 5a - 5d. The tank 22 includes a volume for a liquid to be transported and a hatch 50 of the tank for filling and emptying the tank 22. The tank 22 is advantageously stiffened both in the longitudinal direction and cross direction by means of longitudinal stiffeners 32 and cross-directional stiffeners 34 included in the tank 22. The longitudinal stiffeners are advantageously arranged by means of folds 72, in which case they do not take up space on the outside of the tank. The cross-directional stiffeners 34 are advantageously cut metal sheets 30 that follow the contours of the outer surface of the tank in the cross direction of the tank 22 and that stiffen the structure. Other types of stiffeners can also be utilized. The tank 22 is fastened inside the spill basin advantageously by using locking means 80, such as bolts, in which case the rigidity of the tank 22 serves as a structure that stiffens the spill basin 24 together with the support structure 20, as shown in Figures 1c and 1d. The locking means 80 are shown in Figures 2b, 4a, 4b. An opening 84 of the locking means 80 of the tank 22, which opening 84 is included in the locking means 80 in addition to the bolt, is shown in Figure 5a.

The purpose of the longitudinal and cross-directional stiffeners is also to stiffen the tank 22 against its internal pressure, because the tank 22 must withstand an internal pressure of 2 bar, which may be created when the liquid in the tank 22 gasifies. On the other hand, this durability is provided by giving the cross section of the tank a shape other than a quadrangular primary shape, by making beveled corners 38 between the side walls and bottom of the tank. This stiffens the structure of the tank 22.

Both longitudinal and cross-directional splash guards 68 are advantageously provided inside the tank 22. The splash guards 68 limit the movement of the liquid in the tank 22 during transport. Cross-directional splash guards 68 can be seen in Figure 1d. This is important so that the great mass of the liquid cannot move from one side to the other, which at worst might throw the tank trailer off the road.

In accordance with Figure 1c, the tank 22 is positioned centrally with respect to the spill basin 24 by means of the guides. The volume intended for any liquid potentially leaking from the tank 22 is in this case formed on the sides of the spill basin. The tank 22 remains partially off the bottom of the spill basin 24, in which case, for example, if there is a leak on the left side of the tank 22, the liquid can also flow to the right side of the tank 22 to the spill basin 24.

In accordance with Figure 1c, the cover structure 42 advantageously covers the entire width of the tank trailer 10. Those parts of the spill basin 24 outside the perimeter of the tank 22 can be covered so that they can be used as the bottom of storage spaces formed inside the cover structure 42. The cover structure 42 can be fastened on top of the spill basin 24 and the tank 22 by means of quick coupling means 86, as shown in Figure 1c. The quick coupling means can be, for example, bolts and nuts that are adapted to an easily accessible place for uncoupling in connection with the removal of the tank.

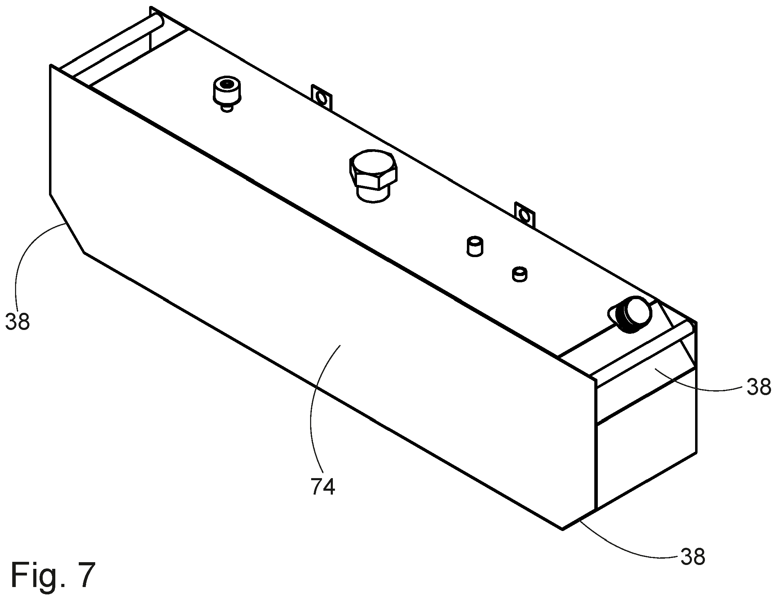

In accordance with Figure 1d, the side profile of the cover structure 42 is shaped so that the cover structure 42 at the front end of the tank trailer 10 is beveled in order to reduce air resistance. Figure 1d also shows a cross-directional space 76 formed on the front side of the tank 22 for a second tank 74. The second tank 74 is advantageously also dimensioned so that an empty space remains around it inside the spill basin 24 in the cross direction of the tank trailer to receive any liquid potentially running from the second tank. The second tank 74 is shown in more detail and separately in Figure 7.

The second tank 74 advantageously also includes beveled corners 38, the purpose of which is to stiffen and reinforce the second tank against internal pressure.

In accordance with Figure 1d, a support structure 20 is fastened to the bottom of the spill basin 24, and the cross-directional beams 26 of the support structure 20 are used for fastening the axle group 16. The axle group 16 advantageously includes two separate axles 44, 46, where the first axle 44 is the front axle in the travel direction of the tank trailer 10 and the second axle 46 is the rear axle.

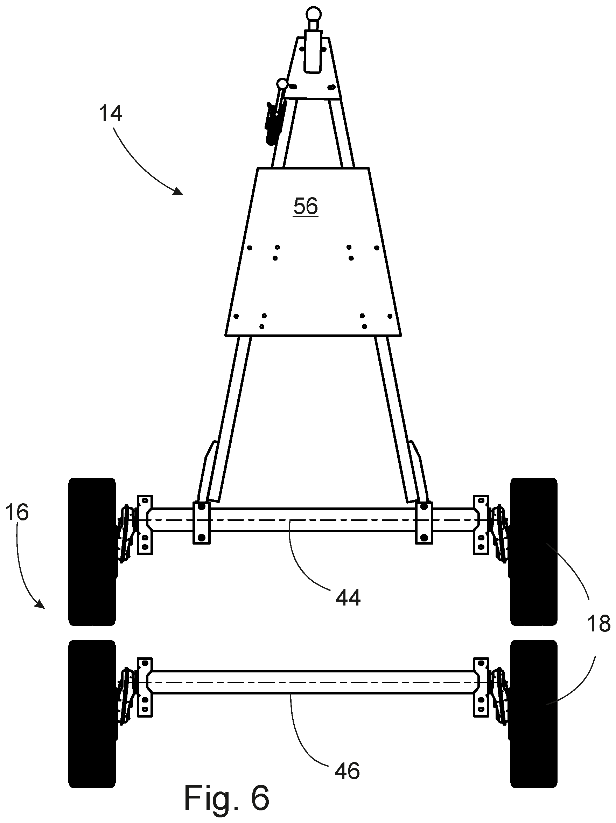

The axle group 16 is shown from the top separately together with the drawbar 14 in Figure 6. In this case, the drawbar 14 is connected directly to the first axle 44, not to the body, which is the conventional connection of the drawbar. By having two axles, the load-bearing capacity of the tank trailer can be increased by still using ordinary road traffic wheels 18. The self-supporting body advantageously connects the axles to each other.

In accordance with Figure 6, a separate support plate 56 can be adapted on top of the drawbar 14, which support plate 56 partly stiffens the drawbar 14, but it also provides a support level on top of which accessories can be fastened. The drawbar and axle group used can be structures fully similar to solutions known from road traffic applications, such as products marketed under the trade name AL-KO.

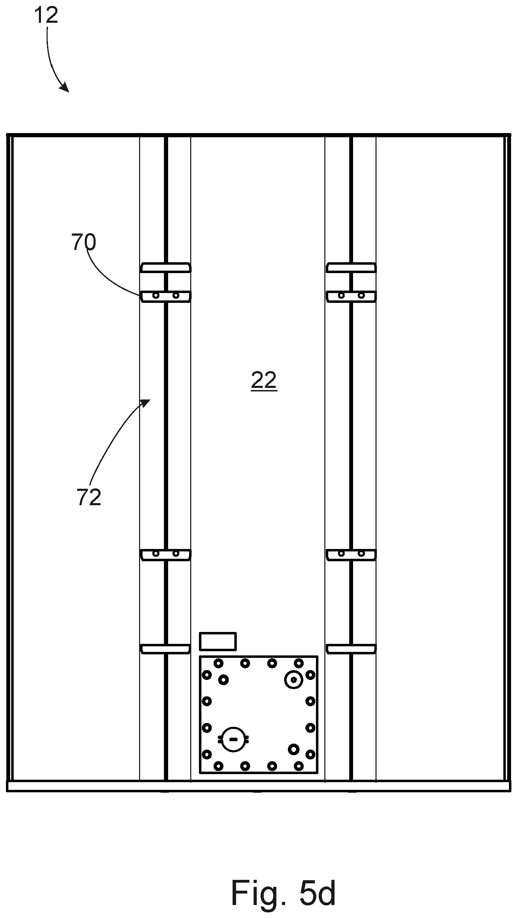

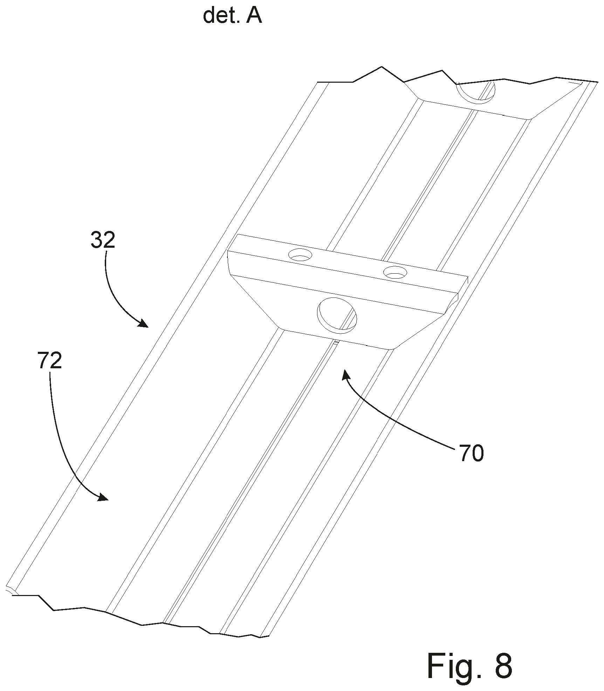

Lifting lugs 70 shown in Figure 8 are provided in the folds 72, which constitute advantageously longitudinal stiffeners 32, on the top surface of the usage position of the tank for lifting and lowering the tank. There can be, for example, a total of four lifting lugs 70 on the cover of the tank 22, as shown in Figures 5a and 5d. The lifting lugs can be used for lifting the tank by means of, for example, a crane and lifting slings, and the fastening of the lifting slings can be done easily on top of the tank 22.

The cover structure 42 advantageously includes, as shown in Figures 1a and 1b, openable hatches 48 of the cover structure, through which hatches 48 access is provided into the space inside the cover structure for the emptying and filling of the tank, for example. Tool racks or tool walls or both as well as a container for tools and supplies needed in refueling and various types of maintenance work can be provided inside the cover structure. As an example, refueling hoses can be adapted on reels inside the cover structure, and pumps can also be placed inside it. Lighting can be integrated into the hatches, and there can be a separate 12 V battery system for lighting in the tank trailer. Open hatches also provide protection from weather during maintenance work.

The tank and the spill basin are advantageously made from carbon steel, for example, the thickness of which is 2 - 5 mm, advantageously 3 - 4 mm. Carbon steel with a thickness of 1 mm or other applicable material can be used in the other structures. The cover structure can also be made of composite material or other light-weight material.

The tank trailer according to the invention can be used in many different applications, such as by the defense forces for the distribution of fuel, where the refueling sites can be located in cross-country terrains. The most advantageous application is the refueling of forestry machines, for which application the tank trailer according to the invention is highly suited due to its easy transferability. The liquid stored in the tank or tanks can advantageously be diesel oil and urea. In other words, the tank trailer according to the invention can be used in cross-country terrains, but it is also approved for road traffic use and can be towed by fully normal tow vehicles, such as a van.

## Claims

1. A tank trailer (10), which includes a body (12), a drawbar (14), an axle group (16) with wheels (18) for supporting the tank trailer (10) to a base and a tank (22) for storing liquid, a spill basin (24) adapted to surround the tank (22), a volume of which spill basin (24) is greater than or equal to, advantageously 10% greater than volume of the tank (22), in order to collect and recover any liquid potentially leaking from the tank (22), **characterized in that** the axle group (16) with the wheels (18) is supported to the body (12), and the tank (22) includes cross-directional stiffeners (34) of the tank trailer (10), which stiffeners (34) are adapted to transmit forces between the tank (22) and the spill basin (24) to constitute the self-supporting body (12).

2. The tank trailer (10) according to claim 1, **characterized in that** the tank trailer (10) includes a support structure (20) adapted to be fastened under the spill basin (24) in order to stiffen the body, which support structure (20) includes cross-directional beams (26) of the tank trailer (10) and edge parts (28) that connect the cross-directional beams (26).

3. The tank trailer (10) according to claim 1 or 2, **characterized in that** the tank (22) includes longitudinal stiffeners (32) of the tank trailer (10) to stiffen said tank (22), where the longitudinal stiffeners (32) are folds (72) provided in the tank.

4. The tank trailer (10) according to any one of the claims 1 - 3, **characterized in that** the tank trailer (10) includes a second tank (74) for another liquid to be stored, and the spill basin (24) includes a separate cross-directional space (76) for a second tank (74).

5. The tank trailer (10) according to any one of the claims 1 - 4, **characterized in that** the tank (22) includes beveled corners (38) in order to increase the pressure resistance of the tank (22).

6. The tank trailer (10) according to any one of the claims 1 - 5, **characterized in that** the tank trailer (10) includes locking means (80) for locking the tank (22) in a detachable manner to the spill basin (24) to form the body (12) .

7. The tank trailer (10) according to any one of claim 6, **characterized in that** the spill basin (24) includes guides (36) for positioning the tank (22) in the spill basin (24) while the tank (22) can be lowered by means of the guides (36) into the spill basin (24) for transport and lifted out of the spill basin (24) for inspection.

8. The tank trailer (10) according to claim 7, **characterized in that** the tank (22) includes lifting lugs (70) embedded in a top surface of the tank (22) for lifting the tank (22) out of the spill basin (24) and for lowering it into the spill basin (24).

9. The tank trailer (10) according to any one of the claims 1 - 8, **characterized in that** the tank trailer (10) includes an openable cover structure (42) adapted on top of the tank (22) and the spill basin (24), forming a storage space.

10. The tank trailer (10) according to claim 9, **characterized in that** the tank trailer (10) includes quick coupling means for fastening and detaching the cover structure (42) for the lifting of the tank (22).

11. The tank trailer (10) according to any one of the claims 1 - 10, **characterized in that** the drawbar (14) is connected directly to the axle group (16).

12. The tank trailer (10) according to any one of the claims 2 - 10, **characterized in that** the axle group (16) includes two axles (44, 46), and the drawbar (14) is fastened to the axle (44) first in the travel direction of the tank trailer (10), with the axles (44, 46) being connected to the cross-directional beams (26).

13. The tank trailer (10) according to any one of the claims 4 - 12, **characterized in that** the spill basin (24) includes a separating wall (62) for forming two separate spaces for a tank (22) and a second tank (74).

14. The tank trailer (10) according to any one of the claims 1 - 13, **characterized in that** the primary shape of the cross section of the tank (22) is a quadrangle where the corners are beveled in order to increase rigidity.

15. The tank trailer (10) according to any one of the claims 1 - 14, **characterized in that** the tank (22) and the spill basin (24) are made from carbon steel, the thickness of which is 2 - 5 mm, advantageously 3 - 4 mm.
